# EUROPÄISCHE PATENTSCHRIFT

(11) **EP 1 175 707 B1**
(45) Veröffentlichungstag und Bekanntmachung des Hinweises auf die Patenterteilung: **19.03.2003**
(21) Anmeldenummer: 00934923.4
(22) Anmeldetag: 19.04.2000
(51) Int. Cl.: H01M 8/06, H01M 8/00

(54) **NETZUNABHÄNGIGE, SCHADSTOFFEMISSIONSFREIE, PORTABLE STROMVERSORGUNGSEINRICHTUNG SOWIE VERFAHREN ZUR ERZEUGUNG VON STROM MITTELS DIESER**
MAINS-INDEPENDENT PORTABLE POWER GENERATION SYSTEM WITHOUT POLLUTANT EMISSION, AND METHOD FOR PRODUCING ELECTRIC CURRENT USING SAME
DISPOSITIF D'ALIMENTATION EN COURANT PORTATIF, INDEPENDANT DU RESEAU ET N'EMETTANT PAS DE SUBSTANCES NOCIVES, AINSI QUE PROCEDE POUR LA PRODUCTION DE COURANT AU MOYEN DE CE DISPOSITIF

(30) Priorität: 20.04.1999 DE 19917826
(43) Veröffentlichungstag der Anmeldung: 30.01.2002
(73) Patentinhaber: Zentrum für Sonnenenergie- und Wasserstoff-Forschung Baden-Württemberg Gemeinnützige Stiftung, 70565 Stuttgart (DE)
(72) Erfinder: ROHLAND, Bernd, D-10717 Berlin (DE); SCHOLTA, Joachim, D-89278 Nersingen (DE); JÖRISSEN, Ludwig, D-89231 Neu-Ulm (DE); ZETTISCH, Georg, D-89073 Ulm (DE); STEINHART, Klaus, D-72534 Hayingen (DE); ROSER, Jochen, D-89340 Leipheim (DE)
(74) Vertreter: Merkle, Gebhard
(86) Internationale Anmeldenummer: DE0001282
(87) Internationale Veröffentlichungsnummer: WO00063993

(56) Entgegenhaltungen:
- EP-A- 0 788 172
- EP-A- 0 813 264
- DE-A- 19 644 864
- US-A- 5 853 910
- OGINO S ET AL: "FUEL CELL POWERED ELECTRIC VEHICLE" EVS. INTERNATIONAL ELECTRIC VEHICLE SYMPOSIUM,JP,TOKYO, JEVA, Bd. SYMP. 13, 13. Oktober 1996 (1996-10-13), Seiten 671-674, XP000687930
- PATENT ABSTRACTS OF JAPAN vol. 1995, no. 10, 30. November 1995 (1995-11-30) & JP 07 192743 A (MAZDA MOTOR CORP), 28. Juli 1995 (1995-07-28) -& DATABASE WPI Derwent Publications Ltd., London, GB; AN 1995-296915 XP002147037
- PATENT ABSTRACTS OF JAPAN vol. 018, no. 658 (E-1643), 13. Dezember 1994 (1994-12-13) -& JP 06 260202 A (MITSUBISHI HEAVY IND LTD), 16. September 1994 (1994-09-16)
- PATENT ABSTRACTS OF JAPAN vol. 010, no. 054 (E-385), 4. März 1986 (1986-03-04) -& JP 60 207256 A (HITACHI SEISAKUSHO KK), 18. Oktober 1985 (1985-10-18)
- H:H: VOSS ET AL: "OPPORTUNITIES FOR PORTABLE BALLARD FUEL CELLS" FUEL CELL 1996 PROCEEDINGS OF FUEL CELL SEMINAR, ORLANDO, USA 17-20 NOV 1996, Seiten 672-673, XP002147036
- PATENT ABSTRACTS OF JAPAN vol. 015, no. 288 (E-1092), 22. Juli 1991 (1991-07-22) -& JP 03 101063 A (SANYO ELECTRIC CO LTD), 25. April 1991 (1991-04-25)
- PATENT ABSTRACTS OF JAPAN vol. 015, no. 288 (E-1092), 22. Juli 1991 (1991-07-22) -& JP 03 101062 A (SANYO ELECTRIC CO LTD), 25. April 1991 (1991-04-25)

## Beschreibung

Die Erfindung betrifft eine stromnetzunabhängige, schadstoffemissionsfreie und daher umweltfreundliche, portable Stromversorgungseinrichtung für beispielsweise Camping, Segelboote, Gartenhäuser und stromnetzferne technische Anlagen sowie ein Verfahren zur Erzeugung von Strom mittels einer solchen Stromversorgungseinrichtung.

Zur netzfernen portablen Stromversorgung werden gegenwärtig Batterien, Notstromaggregate und Brennstoffzellen eingesetzt.

Batterien wie der Blei-Akkumulator weisen jedoch eine geringe Speicherkapazität auf und benötigen aufgrund auftretender Selbstentladung nach längeren Stillstandszeiten ein Stromnetz zur Wiederaufladung.

Notstromaggregate wie etwa auf Basis von Benzin- oder Dieselmotoren sind darin nachteilig, daß sie Lärm und Schadstoffemissionen verursachen.

Bei den bislang eingesetzten Brennstoffzellen für eine netzferne Stromversorgung handelt es sich um große Aggregate, die zumeist mit Erdgas oder Methanol, das durch Reformieren zu Wasserstoff umgesetzt wird, betrieben werden. Ihre sofortige Betriebsbereitschaft ist entweder durch Anheizzeiten, wie bei Hochtemperatur-Brennstoffzellen oder durch Reformer-Einlaufzeiten, wie bei PEM-Brennstoffzellen soweit eingeschränkt, daß sie erst nach Stunden (PEM-Brennstoffzellen) oder Tagen (Hochtemperatur-Brennstoffzellen) mit voller Leistung betriebsbereit sind.

Zwar weisen Direktmethanol-Brennstoffzellen diesen Nachteil nicht auf, sie erbringen jedoch auf dem gegenwärtigen Entwicklungsstand nicht die erforderliche spezifische Leistung. Gleiches trifft für wasserstoffbetriebene Mini-PEM-Brennstoffzellen zur Versorgung von beispielsweise Computern und Mobiltelefonen zu.

In EP 0 568 822 A2 wird eine netz- und wärmeseitig angekoppelte Energieversorgungseinheit beschrieben, welche nach einer mathematischen Gleichung zur Minimierung des Primärenergieeinsatzes und der Energiekosten betrieben wird. Diese Anwendung bezieht sich eindeutig auf ein stationäres System unter dem Gesichtspunkt der Kostenminimierung und ist daher nicht relevant für portable Anwendungen. Gleiches gilt für GB 2 250 130 A, in der ein Brennstoffzellen-System im Hinblick auf eine Anwendung in U-Booten beschrieben wird.

In der Veröffentlichung OGINO et al: "Fuel cell powered electric vehicles", International Electric Vehicle Symposium, Tokio, Band SYMP. 13 ist ein brennstoffzellenbetriebenes Elektrofahrzeug mit einem Brennstoffzellensystem beschrieben, das aus einem PEM-Brennstoffzellen-Stapel besteht, der aus einem Metallhydrid-Speichertank mit Wasserstoff und durch eine Luftpumpe mit Luft versorgt wird. Die Vorrichtung weist eine Rezirkulationsanordnung für unverbrauchten Wasserstoff mit entsprechenden Rohren und Pumpe auf. Es ist eine Steuer/Regeleinheit vorgesehen, die die erforderlichen Betriebsparameter der Brennstoffzelle in Abhängigkeit vom elektrischen Energieverbrauch steuert bzw. regelt.

Der Erfindung liegt daher die Aufgabe zugrunde, eine sofort betriebsbereite, leistungsstarke, stromnetzunabhängige, schadstoffemissionsfreie, portable Stromversorgungseinrichtung sowie ein Verfahren zur Erzeugung von Strom mittels dieser vorzusehen.

Diese Aufgabe wird durch eine Stromversorgungseinrichtung gemäß Anspruch 1 sowie ein Verfahren zur Erzeugung von Strom gemäß Anspruch 9 gelöst. Vorteilhafte bzw. besonders bevorzugte Ausführungsformen des Anmeldungsgegenstandes sind in den Unteransprüchen angegeben.

Die Erfindung betrifft somit eine netzunabhängige, schadstoffemissionsfreie, portable Stromversorgungseinrichtung, umfassend
eine Brennstoffzelleneinheit mit einem Anodenraum, einer Polymer-Elektrolyt-Membran (PEM) und einem Kathodenraum;
eine Wasserstoff-Speichereinrichtung;
eine Leitung zum Zuführen des Wasserstoffs von der Speichereinrichtung zum Anodenraum;
eine Leitung und eine Pumpe zum Rezirkulieren von nicht umgesetztem Wasserstoff vom Anodenraumausgang zum Anodenraumeingang;
eine Leitung und eine Pumpe zum Zuführen von Luft zum Kathodenraum;
eine Leitung zum Abführen von wasserdampfhaltigem Kathodengas;
einen Wärmetauscher, welcher die Speichereinrichtung umgibt;
einen Kühlmittelkreislauf mit einer Pumpe zwischen Wärmetauscher und Brennstoffzelleneinheit;
eine Einrichtung zur Abnahme von erzeugtem Strom; und
eine Steuer/Regeleinheit zur Steuerung/Regelung der Wasserstoff-rezirkulation, der Luftzufuhr und des Kühlmittelkreislaufes in Abhängigkeit der Soll-Zellspannung und der Soll-Zelltemperatur.

Gemäß der Erfindung hat sich gezeigt, daß eine solche Stromversorgungseinrichtung sofort und leistungsstark betriebsbereit ist und den Anforderungen an eine portable Stromversorgung für beispielsweise Camping, Segelboote, Gartenhäuser und netzferne technische Anlagen im Kilowattbereich genügt. Die gesamte Stromversorgungseinrichtung ist geeigneterweise in Leichtbauweise in ein tragbares Gestell integriert.

Bei einer bevorzugten Ausführungsform umfaßt die erfindungsgemäße Stromversorgungseinrichtung eine Pumpe zum Rezirkulieren von wasserdampfhaltigem Kathodengas vom Kathodenraumausgang zum Kathodenraumeingang bzw. ein Gebläse, um wasserdampfhaltiges Kathodengas homogen über den Kathodenraum zu verteilen.

Bei der Wasserstoff-Speichereinrichtung handelt es sich um im Handel erhältliche Metallhydridspeicher, beispielsweise auf Basis von Ti-Ni-Legierungen. Diese können dadurch regeneriert werden, daß sie unter einem Druck von beispielsweise 10 bar mit Wasserstoff über einen ausreichenden Zeitraum von beispielsweise 15 Minuten beaufschlagt werden. Besonders bevorzugt handelt es sich um eine regenerierbare Metallhydrid-Speicherpatrone mit Bajonettverschluß, so daß die leere Hydridspeicherpatrone in einfacher Weise durch eine gefüllte ausgetauscht werden kann.

Bei der Brennstoffzelleneinheit handelt es sich vorzugsweise um einen sogenannten Brennstoffzellen-Stack, das eine Vielzahl von Brennstoffeinzelzellen umfaßt.

Gemäß einer besonders bevorzugten und zweckmäßigen Ausführungsform Ist in der Leitung zum Zuführen des Wasserstoffs von der Speichereinrichtung zum Anodenraum ein Druckminderventil vorgesehen, um den Wasserstoff mit konstantem Vordruck dem Anodenraum zuzuführen.

Gemäß einer weiteren bevorzugten Ausführungsform umfaßt die Stromversorgungseinrichtung weiterhin einen mit der Anodenabgasleitung über ein Ventil verbundenen Kondensatwasserabscheider, um beispielsweise bei einem Spülzyklus Kondensatwasser auszuscheiden. Die Kathodenabgasleitung kann ebenfalls mit einem Kondensatwasserabscheider verbunden sein, um beispielsweise bei einem Spülzyklus im Kathodenraum vorhandenes Kodensatwasser auszuscheiden.

Gegenstand der Erfindung ist weiterhin ein Verfahren zur Erzeugung von Strom mittels der oben beschriebenen Stromversorgungseinrichtung, umfassend folgende Schritte
Zuführen von Wasserstoff in den Anodenraum der Brennstoffzelleneinheit;
Rezirkulieren von nicht umgesetztem Wasserstoff vom Anodenraumausgang zum Anodenraumeingang;
Zuführen von Luft in den Kathodenraum der Brennstoffzelleneinheit;
Rezirkulieren von Kühlmittel mittels Pumpe, indem von der Brennstoffzelleneinheit erwärmtes Kühlmittel zum Wärmetauscher geführt wird, wobei die von der Brennstoffzelleneinheit erzeugte Wärme auf die bei der Wasserstoffentnahme sich abkühlende Wasserstoff-Speichereinrichtung übertragen wird; und
Steuerung bzw. Regelung der Wasserstoffrezirkulation, der Luftzufuhr und des Kühlmittelkreislaufes in Abhängigkeit der Soll-Zellspannung und der Soll-Zelltemperatur.

Beim erfindungsgemäßen Verfahren ist es besonders vorteilhaft und zweckmäßig, den Wasserstoff mit konstantem Vordruck dem Anodenraum zuzuführen, was mittels eines Druckminderventils erreicht werden kann.

Beim vollautomatischen Betrieb der Stromversorgungseinrichtung mittels dem erfindungsgemäßen Verfahren erbringt die Brennstoffzelle nahezu sofort ihre volle elektrische Leistung von beispielsweise einigen hundert Watt(el). Durch das Rezirkulieren von nicht umgesetztem Wasserstoff vom Anodenraumausgang zum Anodenraumeingang wird der Wasserstoff ohne Taupunktsüberschreitung seines Wasserdampfgehaltes nahezu vollständig (das heißt zu 100%) umgesetzt, so daß die Brennstoffzelle "dead ended" betrieben werden kann. Bei Verwendung von Reformat-Wasserstoff wird dahingegen nur eine ca. 70%ige Umsetzung des Wasserstoffs erreicht.

Der Wasserdampfgehalt wird durch das Produktwasser der Kathodenseite der Brennstoffzelle eingestellt, wobei gemäß einer Ausführungsform wasserdampfhaltiges Kathodengas vom Kathodenraumausgang zum Kathodenraumeingang rezirkuliert werden kann.

Vorzugsweise wird die Stromversorgungseinrichtung bei einer Soll-Zelltemperatur von maximal etwa 40°C betrieben. Wenn andererseits bei einer Soll-Zelltemperatur von über 40°C gearbeitet wird, ist es vorteilhaft, wasserdampfhaltiges Kathodengas mittels Gebläse homogen über den Kathodenraum zu verteilen, um eine Austrocknung der PEM zu verhindern.

Das erfindungsgemäße Verfahren vermeidet Anfahrzeiten bei verminderter Leistung, die ohne die erfindungsgemäße Verfahrensweise in Folge inhomogener Wasserdampfkondensation und dadurch Desaktivierung der Brennstoffzelleneinheit solange erforderlich sind, bis die Betriebstemperatur der Brennstoffzelleneinheit zur Verdampfung des Kondensatwassers führt. Bei Nichteinhaltung der Anfahrzelten bei herkömmlichen PEM-Brennstoffzellanlagen führt die Wasserdampfkondensation in den Anodenkanälen zur Wasserelektrolyse, was zur irreversiblen Schädigung einzelner Zellen des Brennstoffzellen-Stacks (Stapels) führt. Die erfindungsgemäße Arbeitsweise vermeidet diese Nachteile von bekannten PEM-Brennstoffzellenanlagen und gewährleistet so den sofortigen Betrieb bei Vollast sowie den diskontinuierlichen Teillastbetrieb ohne Ausfallerscheinungen.

Als Kühlmittel eignet sich bei der erfindungsgemäßen Stromversorgungseinrichtung insbesondere Wasser.

Bei der erfindungsgemäß angewandten Steuerung handelt es sich vorzugsweise um eine sogenannte speicherprogrammierbare Steuerung (SPS), welche die sofortige volle Leistungsabgabe im Leistungsbereich von beispielsweise 100 W(el) bis 1 kW(e1) garantiert.

Die Erfindung wird anhand der beiliegenden Zeichnung näher erläutert, wobei

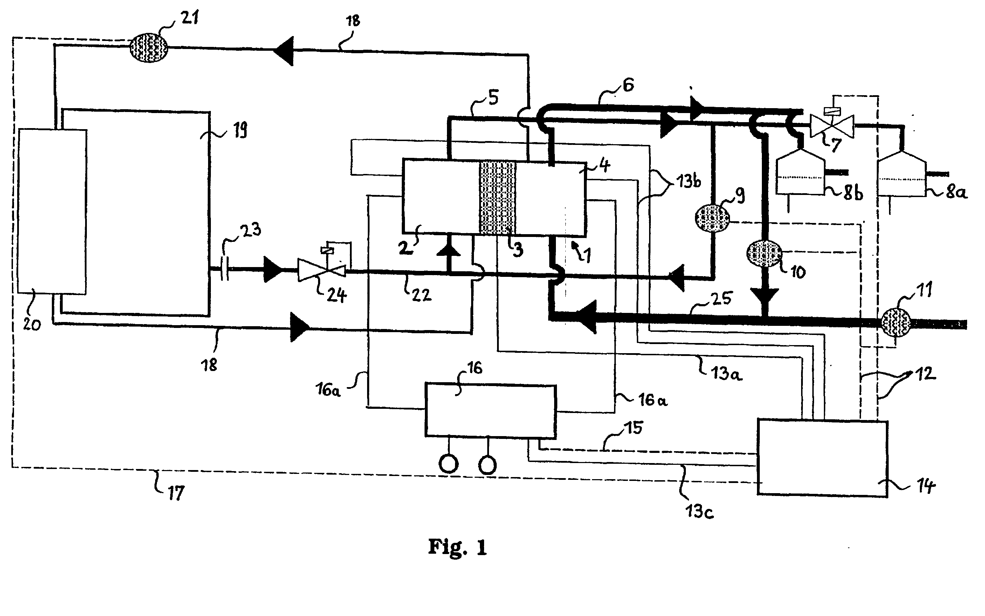

Fig. 1 den schematischen Aufbau einer erfindungsgemäßen Stromversorgungseinrichtung bzw. deren Betrieb zeigt.

Unter Bezugnahme auf Figur 1 umfaßt die erfindungsgemäße Stromversorgungseinrichtung eine Brennstoffzelleneinheit 1 mit einem Anodenraum 2, einer Polymer-Elektrolyt-Membran 3 und einem Kathodenraum 4, eine Wasserstoff-Speichereinrichtung 19 für das wasserstoffhaltige Betriebsgas, das mittels der Leitung 22 über ein Druckminderventil 24 mit konstantem Vordruck dem Anodenraum 2 zugeführt wird. Nicht umgesetzter Wasserstoff wird über Leitung 5 und mittels der Pumpe 9 vom Anodenraumausgang zum Anodenraumeingang rezirkuliert. Über Leitung 25 und mittels Pumpe 11 wird andererseits Luft zum Kathodenraum 4 geführt. Wasserdampfhaltiges Kathodenabgas wird über Leitung 6 abgeführt, wobei wahlweise ein Kondensatwasserabscheider 8b vorgesehen ist. Die Einstellung des Wasserdampfgehaltes kann durch Rezirkulieren des Kathodengases mittels Pumpe/Gebläse 10 erfolgen. Die Einrichtung umfaßt weiterhin einen Wärmetauscher 20, welcher die Speichereinrichtung 19 umgibt. Zwischen Wärmetauscher 20 und der Brennstoffzelleneinheit 1 is ein Kühlmittelkreislauf 18 mit einer Pumpe 21 vorgesehen. Von der Brennstoffzelleneinheit erzeugter Strom wird von der Einrichtung 16, typischerweise einem Relais zur Lastab- bzw. -zuschaltung, abgenommen, welche über den Stromkreis 16a mit der Brennstoffzelleneinheit verbunden ist. Die Steuer/Regeleinheit 14 dient zur Steuerung/Regelung der Wasserstoffrezirkulation, der Luftzufuhr und des Kühlmittelkreislaufes in Abhängigkeit der Soll-Zelispannung und der Soll-Zelltemperatur. Die Speichereinrichtung 19 ist vorzugsweise eine regenerierbare Metallhydrid-Speicherpatrone mit Bajonettverschluß 23 zum einfachen Auswechseln einer leeren gegen eine volle Speicherpatrone.

Beim Startvorgang wird zunächst ein Spülzyklus durch zeitweiliges Öffnen des Ventils 7 (beispielsweise ein elektromagnetisches Ventil) ausgelöst. Anschließend werden die Pumpe 11 für die Luft- bzw. Kathodengaszufuhr und die Pumpe 9 für die Anodengasrezyklierung für einige Sekunden eingeschaltet. Nach Überprüfung der Zellspannung und bei einer hinreichend großen Leerlaufspannung kann das Lastrelais 16 zugeschaltet werden.

Nach Offnen des Lastrelais 16 werden die Pumpen 9, 11 und 21 mittels der Steuer/Regelemheit 14 über die Steuersignalleitung 12 für die Gas- und Luftzufuhr, Temperatursignalleitung 13a der Brennstoffzelle, Spannungssignalleitung 13b der Brennstoffzelle. Stromsignalleitung 13c für die Verbrauchslast, Lastfreigabesignalleitung 15 sowie Steuersignalleitung 17 für die Kühlmittelpumpe gesteuert bzw. geregelt. Liegt die mittlere Zellspannung über einer Höchstschwelle, wird lediglich die Kühlmittelpumpe 21 für einige Sekunden, beispielsweise 5 Sekunden pro Minute, zugeschaltet. falls die Zelltemperatur eine Mindestschwelle über- und eine Höchstschwelle noch nicht unterschritten hat. Sinkt die Zellspannung unter die Höchstschwelle, wird die Leistung der Pumpen 9 und 11 stromabhängig gesteuert. Unterschreitet die Zellspannung eine Mindestschwelle, wird stromunabhängig mit maximaler Pumpenleistung gefahren. Damit wird erfindungsgemäß sichergestellt, daß die Zelle bis zur theoretischen Betriebstemperatur für vollständigen Feuchteaustrag mit optimalen Umsetzungsgraden gefahren wird. Diese Temperatur wird aufgrund der Auslegung des Kühlkreislaufs nicht überschritten, so daß die Brennstoffzelle unter allen Bedingungen vor Austrocknung geschützt ist.

Unterschreitet die mittlere Zellspannung eine Abschaltschwelle (etwa 500 mV), wird die Stromlast über das Relais 16 abgeschaltet und der bereits oben beschriebene Spülzyklus aktiviert, das heißt die Brennstoffzelleneinheit wird nur durch den Stromverbrauch der Pumpe 11 für die Luftzuführung und der Pumpe 9 zum Rezirkulieren von nicht umgesetztem Wasserstoff solange belastet, bis die mittlere Zellspannung auf die geforderte Schwelle (etwa 850 mV) angestiegen ist. Sodann kann der Normalbetrieb fortgesetzt werden. Hierdurch wird erfindungsgemäß gewährleistet. daß der aus der Speichereinrichtung 19 stammende Wasserstoff zu nahezu 100% ausgenutzt wird, da lediglich bei einer Anreicherung des Anodenkreislaufs mit Inertgas und einem daraus resultierenden Zellspannungsabfall unter die Abschaltschwelle nicht umgesetzter Wasserstoff über das Ventil 7 und den Kondensatwasserabscheider 8a abgelassen wird.

## Patentansprüche

1. Netzunabhängige, schadstoffemissionsfreie, portable Stromversorgungseinrichtung, umfassend
eine Brennstoffzelleneinheit (1) mit einem Anodenraum (2), einer Polymer-Elektrolyt-Membran (PEM) (3) und einem Kathodenraum (4);
eine Wasserstoff-Speichereinrichtung (19);
eine Leitung (22) zum Zuführen des Wasserstoffs von der Speichereinrichtung (19) zum Anodenraum (2);
eine Leitung (5) und eine Pumpe (9) zum Rezirkulieren von nicht umgesetztem Wasserstoff vom Anodenraumausgang zum Anodenraumeingang;
eine Leitung (25) und eine Pumpe (11) zum Zuführen von Luft zum Kathodenraum (4);
eine Leitung (6) zum Abführen von wasserdampfhaltigem Kathodengas;
einen Wärmetauscher (20), welcher die Speichereinrichtung (19) umgibt;
einen Kühlmlttelkreislauf (18) mit einer Pumpe (21) zwischen Wärmetauscher (20) und Brennstoffzelleneinheit (1);
eine Einrichtung (16) zur Abnahme von erzeugtem Strom; und
eine Steuer/Regeleinheit (14) zur Steuerung/Regelung der Wasserstoffrezirkulation. der Luftzufuhr und des Kühlmittelkreislaufes in Abhängigkeit der Soll-Zellspannung und der Soll-Zelltemperatur.

2. Stromversorgungseinrichtung nach Anspruch 1. umfassend weiterhin
eine Pumpe (10) zum Rezirkulieren von wasserdampfhaltigem Kathodengas vom Kathodenraumausgang zum Kathodenraumeingang.

3. Stromversorgungseinrichtung nach Anspruch 1, umfassend weiterhin
ein Gebläse, um wasserdampfhaltiges Kathodengas homogen über den Kathodenraum (4) zu verteilen.

4. Stromversorgungseinrichtung nach einem der Ansprüche 1-3. wobei die Wasserstoff-Speichereinrichtung (19) eine auswechselbare und regenerierbare Metallhydrid-Speicherpatrone mit Bajonettverschluß (23) ist.

5. Stromversorgungseinrichtung nach einem der Ansprüche 1-4, wobei die Brennstoffzelleneinheit (1) ein Brennstoffzellen-Stack ist. das eine Vielzahl von Brennstoffeinzelzellen umfaßt.

6. Stromversorgungseinrichtung nach einem der Ansprüche 1-5, umfassend weiterhin
ein in der Leitung (22) vorgesehenes Druckminderventil (24), um den Wasserstoff mit konstantem Vordruck dem Anodenraum (2) zuzuführen.

7. Stromversorgungseinrichtung nach einem der Ansprüche 1-6, umfassend weiterhin
einen mit der Leitung (5) über ein Ventil (7) verbundenen Kondensatwasserabscheider (8a).

8. Stromversorgungseinrichtung nach einem der Ansprüche 1-7, umfassend weiterhin
einen mit der Leitung (6) verbundenen Kondensatwasserabscheider (8b).

9. Verfahren zur Erzeugung von Strom mittels der in den Ansprüchen 1-8 beschriebenen Stromversorgungseinrichtung, umfassend folgende Schritte
Zuführen von Wasserstoff in den Anodenraum (2) der Brennstoffzelleneinheit (I);
Rezirkulieren von nicht umgesetztem Wasserstoff vom Anodenraumausgang zum Anodenraumeingang;
Zuführen von Luft in den Kathodenraum (4) der Brennstoffzelleneinheit (1):
Rezirkulieren von Kühlmittel mittels Pumpe (21), indem von der Brennstoffzelleneinheit (1) erwärmtes Kühlmittel zum Wärmetauscher (20) geführt wird. wobei die von der Brennstoffzelleneinheit (1) erzeugte Wärme auf die bei der Wasserstoffentnahme sich abkühlende Wasserstoff-Speichereinrichtung (19) übertragen wird; und
Steuerung bzw. Regelung der Wasserstoffrezirkulation, der Luftzufuhr und des Kühlmittelkreislaufes in Abhängigkeit der Soll-Zellspannung und der Soll-Zelltemperatur.

10. Verfahren nach Anspruch 9, wobei der Wasserstoff mit konstantem Vordruck dem Anodenraum (2) zugeführt wird.

11. Verfahren nach Anspruch 9 und/oder 10, wobei die Steuerung bzw. Regelung so erfolgt, daß der Wasserstoff im wesentlichen vollständig umgesetzt wird.

12. Verfahren nach einem der Ansprüche 9-11. wobei wasserdampfhaltiges Kathodengas vom Kathodenraumausgang zum Kathodenraumeingang rezirkuliert wird.

13. Verfahren nach einem der Ansprüche 9-12, wobei die Stromversorgungseinrichtung bei einer Soll-Zelltemperatur von maximal etwa 40°C betrieben wird.

14. Verfahren nach einem der Ansprüche 9-12, wobei die Stromversorgungseinrichtung bei einer Soll-Zelltemperatur von über 40°C betrieben wird und hierbei wasserdampfhaltiges Kathodengas mittels Gebläse homogen über den Kathodenraum (4) verteilt wird, um eine Austrocknung der PEM (3) zu verhindern.

15. Verfahren nach einem der Ansprüche 9-14, wobei bei Unterschreiten einer mittleren Zellspannung von etwa 500 mV die Stromlast abgeschaltet und die Brennstoffzelleneinheit (1) nur durch den Stromverbrauch der Pumpe (11) für die Luftzuführung und der Pumpe (9) zum Rezirkulieren von nicht umgesetztem Wasserstoff so lange belastet wird, bis die mittlere Zellspannung auf über etwa 850 mV angestiegen ist.

## Claims

1. Mains-independent, portable power supply device without pollutant emission, comprising
a fuel cell unit (1) having an anode chamber (2), a polymer electrolyte membrane (PEM) (3) and a cathode chamber (4);
a hydrogen storage facility (19);
a line (22) for supplying the hydrogen from the storage facility (19) to the anode chamber (2);
a line (5) and a pump (9) for recirculating unreacted hydrogen from the anode chamber outlet to the anode chamber inlet;
a line (25) and a pump (11) for supplying air to the cathode chamber (4);
a line (6) for carrying away cathode gas containing water vapour;
a heat exchanger (20), which surrounds the storage facility (19);
a coolant circuit (18) with a pump (21) between heat exchanger (20) and fuel cell unit (1);
a device (16) for tapping off the power being produced; and
a control/regulating unit (14) for controlling/regulating the hydrogen recirculation, the air supply and the coolant circuit on the basis of the cell voltage set point and the cell temperature set point.

2. Power supply device according to Claim 1, further comprising
a pump (10) for recirculating cathode gas containing water vapour from the cathode chamber outlet to the cathode chamber inlet.

3. Power supply device according to Claim 1, further comprising
a blower in order to distribute cathode gas containing water vapour homogeneously over the cathode chamber (4).

4. Power supply device according to one of Claims 1-3, the hydrogen storage facility (19) being a replaceable and regenerateable metal hydride storage cartridge with a bayonet closure (23).

5. Power supply device according to one of Claims 1-4, the fuel cell unit (1) being a fuel cell stack which comprises a large number of individual fuel cells.

6. Power supply device according to one of Claims 1-5, further comprising
a pressure reduction valve (24) which is provided in the line (22) in order to supply the hydrogen to the anode chamber (2) at a constant pilot pressure.

7. Power supply device according to one of Claims 1-6, further comprising
a condensate separator (8a) connected to the line (5) via a valve (7).

8. Power supply device according to one of Claims 1-7, further comprising
a condensate separator (8b) connected to the line (6).

9. Method of producing power by means of the power supply device described in Claims 1-8, comprising the following steps
supplying hydrogen into the anode chamber (2) of the fuel cell unit (1);
recirculating unreacted hydrogen from the anode chamber outlet to the anode chamber inlet;
supplying air into the cathode chamber (4) of the fuel cell unit (1);
recirculating coolant by means of pump (21), in that coolant heated by the fuel cell unit (1) is led to the heat exchanger (20), the heat generated by the fuel cell unit (1) being transferred to the hydrogen storage facility (19), which cools down as the hydrogen is removed; and
controlling or regulating the hydrogen recirculation, the air supply and the coolant circuit on the basis of the cell voltage set point and the cell temperature set point.

10. Method according to Claim 9 , the hydrogen being supplied to the anode chamber (2) with a constant pilot pressure.

11. Method according to Claim 9, and/or 10, the control or regulation being carried out in such a way that the hydrogen is substantially completely reacted.

12. Method according to one of Claims 9-11, cathode gas containing water vapour being recirculated from the cathode chamber outlet to the cathode chamber inlet.

13. Method according to one of Claims 9-12, the power supply device being operated at a cell temperature set point of at most about 40°C.

14. Method according to one of Claims 9-12, the power supply unit being operated at a cell temperature set point of more than 40°C and, in this case, cathode gas containing water vapour being distributed homogeneously over the cathode chamber (4) by means of a blower, in order to prevent the PEM (3) drying out.

15. Method according to one of Claims 9-14, the power load being switched off if an average cell voltage falls below about 500 mV, and the fuel cell unit (1) being loaded only by the power consumption of the pump (11) for the air supply and the pump (9) for recirculating unreacted hydrogen, until the average cell voltage has risen to more than about 850 mV.

## Revendications

1. Dispositif d'alimentation en courant, portatif, indépendant du réseau et n'émettant pas de substances nocives, comprenant :
- une unité de pile à combustible (1) munie d'une chambre d'anode (2), d'une membrane polymere-électrolyte (PEM) (3) et d'une chambre de cathode (4) ;
- un dispositif de stockage d'hydrogène (19) ;
- une conduite (22) pour acheminer l'hydrogène du dispositif de stockage (19) à la chambre d'anode (2) ;
- une conduite (5) et une pompe (9) pour la re-circulation de l'hydrogène non transformé, de la sortie de la chambre d'anode à l'entrée de la chambre d'anode ;
- une conduite (25) et une pompe (11) pour acheminer de l'air à la chambre de cathode (4) ;
- une conduite (6) pour évacuer du gaz de cathode contenant de la vapeur d'eau ;
- un échangeur de chaleur (20) qui entoure le dispositif de stockage (19) ;
- un circuit de fluide de refroidissement (19) avec une pompe (21) entre l'échangeur de chaleur (20) et l'unité de pile à combustible (1) ;
- un dispositif (16) pour prélever le courant produit ; et une unité de commande/régulation (14) pour la commande/régulation de la re-circulation d'hydrogène, de l'acheminement d'air, et du circuit de fluide refroidissement en fonction de la consigne de tension de la pile et de la consigne de température de la pile.

2. Dispositif d'alimentation en courant selon la revendication 1, comprenant en outre :
une pompe (10) pour la re-circulation de gaz cathodique contenant de la vapeur d'eau, de la sortie de la chambre de cathode à l'entrée de la chambre de cathode.

3. Dispositif d'alimentation en courant selon la revendication 1, comprenant en outre :
- une soufflante, pour répartir le gaz cathodique contenant de la vapeur d'eau de façon homogène dans la chambre de cathode (4).

4. Dispositif d'alimentation en courant selon l'une des revendications 1 à 3, dans lequel le dispositif de stockage d'hydrogène (19) est une cartouche de stockage métal-hybride avec fermeture à baïonnette (23).

5. Dispositif d'alimentation en courant selon l'une des revendications 1 à 4, dans lequel l'unité de pile à combustible (1) est un empilement de piles à combustible qui comprend plusieurs piles à combustible individuelles.

6. Dispositif d'alimentation en courant selon l'une des revendications 1 à 5, comprenant en outre :
- une valve de détente (24) prévue dans la conduite (22), pour acheminer l'hydrogène avec une pression d'admission constante à la chambre d'anode (19).

7. Dispositif d'alimentation en courant selon l'une des revendications 1 à 6, comprenant en outre :
- un séparateur d'eau de condensation (8a) relié à la conduite (5) par une vanne (7).

8. Dispositif d'alimentation en courant selon l'une des revendications 1 à 7, comprenant en outre :
- un séparateur d'eau de condensation (8b) relié à la conduite.

9. Procédé pour produire du courant au moyen d'un dispositif d'alimentation en courant décrit dans les revendications 1 à 8, comprenant les étapes suivantes :
- acheminer de l'hydrogène dans la chambre d'anode (2) de l'unité de pile à combustible (1) ;
- re-circuler de la sortie de la chambre d'anode à l'entrée de la chambre d'anode, l'hydrogène non transformé ;
- acheminer de l'air dans la chambre de cathode (4) de l'unité de pile à combustible (1) ;
- re-circuler du fluide de refroidissement au moyen d'une pompe (21), en conduisant à l'échangeur de chaleur (20) du fluide de refroidissement réchauffé par l'unité de pile à combustible (1), la chaleur produite par l'unité de pile à combustible (1) étant transmise au dispositif de stockage d'hydrogène (19) se refroidissant lors du prélèvement d'hydrogène, et
- commander ou réguler la re-circulation d'hydrogène, l'acheminement d'air et le circuit de fluide de refroidissement en fonction de la consigne de tension de la pile et de la consigne de température de la pile.

10. Procédé selon la revendication 9, dans lequel l'hydrogène est acheminé dans la chambre d'anode (2) sous pression d'admission constante.

11. Procédé selon la revendication 9 ou 10, dans lequel la commande ou régulation est effectuée de façon que l'hydrogène est transformé de façon sensiblement complète.

12. Procédé selon l'une des revendications 9 à 11, dans lequel du gaz de cathode contenant de la vapeur d'eau est recirculé de la sortie de la chambre de cathode à l'entrée de la chambre de cathode.

13. Procédé selon l'une des revendications 9 à 12, dans lequel on fait fonctionner le dispositif d'alimentation en courant avec une température de consigne de la pile d'au maximum environ 40°C.

14. Procédé selon l'une des revendications 9 à 12, dans lequel on fait fonctionner le dispositif d'alimentation en courant avec une température de consigne de la pile supérieure à 40°C, et du gaz cathodique contenant de la vapeur d'eau est alors réparti de façon homogène dans la chambre de cathode (4) au moyen d'une soufflante pour empêcher un dessèchement de la PEM (3).

15. Procédé selon l'une des revendications 9 à 14, dans lequel lorsqu'une tension moyenne de la pile tombe en-dessous d'environ 500mV on déconnecte la charge de courant et l'unité de pile à combustible (1) n'est chargée que par la consommation de courant de la pompe (11) pour l'acheminement d'air et par celle de la pompe (9) pour re-circuler l'hydrogène non transformé, jusqu'à ce que la tension moyenne de la pile ait dépassé 850mV.
